(19) Europäisches Patentamt
European Patent Office
Office européen des brevets

(11) **EP 3 276 319 A1**

(12) **EUROPÄISCHE PATENTANMELDUNG**

(43) Veröffentlichungstag:
**31.01.2018  Patentblatt 2018/05**

(51) Int Cl.:
***G01L 9/00*** (2006.01)  ***G01L 13/02*** (2006.01)
***G01L 19/00*** (2006.01)  ***G01L 19/06*** (2006.01)

(21) Anmeldenummer: **17177865.7**

(22) Anmeldetag: **26.06.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **29.07.2016  DE 102016114033**

(71) Anmelder: **Endress + Hauser GmbH + Co. KG
79689 Maulburg (DE)**

(72) Erfinder:
• **Kober, Timo
  14482 Potsdam (DE)**
• **Lemke, Benjamin
  12051 Berlin (DE)**
• **Teipen, Rafael
  D-10407 Berlin (DE)**
• **Mack, Benjamin
  79540 Lörrach (DE)**

(74) Vertreter: **Andres, Angelika Maria
  Endress+Hauser (Deutschland) AG+Co. KG
  PatServe
  Colmarer Strasse 6
  79576 Weil am Rhein (DE)**

(54)  **DIFFERENZDRUCKSENSOR**

(57)    Differenzdrucksensor zur Bestimmung eines Druckmesssignals, umfassend:
- eine Differenzdruckmesszelle (40), welcher ein erster und ein zweiter Druck zuführbar ist und welche das Druckmesssignal ausgibt;
- einen ersten und zweiten keramischen Versteifungskörper (42), die jeweils mit der Differenzdruckmesszelle (40) gefügt sind und jeweils einen Kanal (43, 45) aufweisen, über die der erste bzw. zweite Druck der Differenzdruckmesszelle (40) zuführbar sind;
- einen Grundkörper (10) mit einer ersten und einer zweiten Druckeingangsöffnung (12, 14), die sich jeweils von einer ersten Fläche (16) zu einer zweiten Fläche (18) des Grundkörpers (10) erstrecken, wobei die Druckeingangsöffnungen (12, 14) an der ersten Fläche (16) jeweils mit einer Trennmembran (28, 30) verschlossen sind,
- ein erstes und ein zweites Druckrohr (20, 22), welche zwischen Versteifungskörper und Grundkörper angeordnet sind, und wobei sowohl das erste Druckrohr (20) und das zweite Druckrohr (22) in einem Bereich zwischen des Grundkörpers und der ersten bzw. zweiten Verbindungsfläche (21, 23) des entsprechenden Druckrohrs (20, 22) jeweils zumindest eine Biegung aufweist.

Fig. 2

**Beschreibung**

Die Erfindung bezieht sich auf einen Differenzdrucksensor zur Bestimmung eines Druckmesssignals.

Differenzdrucksensoren zum Einsatz in der industriellen Messtechnik sind aus dem Stand der Technik hinlänglich bekannt. Diese weisen gewöhnlich eine mikromechanisch gefertigte auf einem Halbleitermaterial basierende Differenzdruckmesszelle auf, die zwischen zwei Versteifungskörpern angeordnet ist. Der Differenzdruckmesszelle ist zur Bestimmung eines Druckmesssignals ein erster Druck und ein zweiter Druck zugeführt. Hierfür ist in den Versteifungskörpern jeweils ein um 90° gewinkelter Kanal ausgebildet, der an einem Ende des Versteifungskörpers in die Differenzdruckmesszelle und an dem anderen Ende in jeweils eine Kapillare mündet. Die Kapillaren wiederum verbinden die Versteifungskörper mit einem Grundkörper, welcher zum Anbinden der Differenzdruckmesszelle an einen Prozess dient. Hierzu weist der Grundkörper zwei Trennmembranen auf, die jeweils einen von dem Grundkörper über die Kapillaren und den Versteifungskörpern bis hin zu der Differenzdruckmesszelle gebildeten hydraulischen Pfad von dem zu messenden Medium trennt. Über den hydraulischen Pfad wird jeweils der an der Trennmembran anliegende Druck zu der Differenzdruckmesszelle geführt, um so das Druckmesssignal bestimmten zu können.

Bei den aus dem Stand der Technik bekannten Differenzdrucksensoren sind die Kapillaren gewöhnlich als gerade Rohre zwischen den Versteifungskörpern und dem Grundkörper ausgeführt. Als Materialen kommen bei den aus dem Stand der Technik bekannten Differenzdrucksensoren für den Grundkörper ein rostfreier Stahl (VA-Stahl), für die Kapillaren eine Kovar-Legierung und für die Versteifungskörper eine Keramik zum Einsatz.

Dies hat den Nachteil, dass sich bei Temperaturänderungen der Grundkörper deutlich mehr ausdehnt als der Verbund aus Versteifungskörper und Differenzdruckmesszelle, da der thermische Ausdehnungskoeffizient des Grundkörpermaterials deutlich höher ist als der des Materials der Differenzdruckmesszelle bzw. der Versteifungskörper. Die Ausdehnungsunterschiede führen wiederum dazu, dass eine Biegebelastung der Differenzdruckmesszelle erfolgt. Die Biegebelastung kann zu einer Verfälschung des Druckmesssignals und somit zu einer Einschränkung hinsichtlich der Genauigkeit und/oder der Langzeitstabilität führen. Darüber hinaus, kann die Biegebelastung, im schlimmsten Fall, zu einer Zerstörung der Differenzdruckmesszelle oder einem anderen Teil des Differenzdrucksensors führen.

Es ist somit eine Aufgabe der Erfindung, eine Differenzdruckmesszelle vorzuschlagen, die eine erhöhte mechanische Stabilität bei Temperaturänderungen aufweist.

Die Aufgabe wird erfindungsgemäß gelöst durch den Differenzdrucksensor gemäß dem unabhängigen Patentanspruch 1.

Der erfindungsgemäße Differenzdrucksensor zur Bestimmung eines Druckmesssignals umfasst:

- eine Differenzdruckmesszelle, welcher ein erster und ein zweiter Druck zuführbar ist und welche einen Wandler aufweist, der in Abhängigkeit einer Differenz zwischen dem ersten und dem zweiten Druck das Druckmesssignal ausgibt;
- einen ersten keramischen, vorzugsweise Aluminiumnitrid aufweisenden Versteifungskörper, der mit der Differenzdruckmesszelle gefügt ist und einen ersten Kanal aufweist, über den der erste Druck der Differenzdruckmesszelle zuführbar ist;
- einen zweiten keramischen, vorzugsweise Aluminiumnitrid aufweisenden Versteifungskörper , der mit der Differenzdruckmesszelle gefügt ist und einen zweiten Kanal aufweist, über den der zweite Druck der Differenzdruckmesszelle zuführbar ist;
- einen Grundkörper mit einer ersten und einer zweiten Druckeingangsöffnung, die sich jeweils von einer ersten Fläche zu einer zweiten Fläche des Grundkörpers erstrecken, wobei die Druckeingangsöffnungen an der ersten Fläche jeweils mit einer Trennmembran verschlossen sind,
- ein erstes Druckrohr, welches mit einem ersten Ende mit der ersten Druckeingangsöffnung kommuniziert und druckfest mit dem Grundkörper verbunden ist, wobei das erste Druckrohr mit einem zweiten Ende druckfest mit dem ersten Versteifungskörper an einer ersten Verbindungsfläche verbunden ist,
- ein zweites Druckrohr, welches mit einem ersten Ende mit der zweiten Druckeingangsöffnung kommuniziert und druckfest mit dem Grundkörper verbunden ist, wobei das zweite Druckrohr mit einem zweiten Ende druckfest mit dem zweiten Versteifungskörper an einer zweiten Verbindungsfläche verbunden ist,

wobei sowohl das erste Druckrohr und das zweite Druckrohr in einem Bereich zwischen der zweiten Fläche des Grundkörpers und der ersten bzw. zweiten Verbindungsfläche des entsprechenden Druckrohrs jeweils zumindest eine Biegung aufweist.

Erfindungsgemäß wird die thermisch bedingte Biegebelastung bzw. thermomechanische Rückwirkung durch eine gegenüber dem Stand der Technik neue Geometrie der Kapillaren bzw. Druckrohre verhindert. Die erfindungsgemäße neue Geometrie sieht vor, dass die Kapillaren bzw. Druckrohre nicht mehr gerade zwischen den Versteifungskörpern und dem Grundkörper verlaufen, sondern, dass diese eine Biegung aufweisen bzw. gebogen sind.

Eine vorteilhafte Weiterbildung der Erfindung sieht vor, dass die zumindest eine Biegung derartig ausgebildet ist, dass eine thermomechanische Rückwirkung des Grundkörpers auf einen Verbund aus Verstärkungskörper und Differenzdruckmesszelle im thermischen Gleichgewicht minimal ist.

Eine weitere vorteilhafte Weiterbildung der Erfindung sieht vor, dass die zumindest eine Biegung des jeweiligen Druckrohres derartig ausgebildet ist, dass das erste und zweite Druckrohr zueinander hin gerichtet sind, vorzugsweise sich kreuzen, und im Wesentlichen folgendes gilt:

$$\left| \frac{d \cdot \alpha_G + c \cdot \alpha_{VK} \cdot + \frac{a}{2} \cdot \alpha_{DZ} - \left(c + d + \frac{a}{2}\right) \cdot \alpha_K}{d \cdot \alpha_G + c \cdot \alpha_{VK} \cdot + \frac{a}{2} \cdot \alpha_{DZ} + \left(c + d + \frac{a}{2}\right) \cdot \alpha_K} \right| \le \beta$$

mit:

a: Dicke der Differenzdruckmesszelle in Richtung einer ersten Achse, welche durch einen ersten Mittelpunkte der ersten Verbindungsfläche und einem zweiten Mittelpunkt der zweiten Verbindungsfläche festgelegt ist;
c: Abstand in Richtung der ersten Achse zwischen einer zweiten Achse, welche eine Symmetrieachse des Differenzdrucksensors darstellt und dem ersten Mittelpunkt;
d: Abstand in Richtung der ersten Achse zwischen der zweiten Achse und einem Mittelpunkt des ersten Endes des Druckrohres;
$\alpha_{DZ}$: thermischer Ausdehnungskoeffizient der Differenzdruckmesszelle;
$\alpha_{VK}$: thermischer Ausdehnungskoeffizient des Versteifungskörpers;
$\alpha_K$: thermischer Ausdehnungskoeffizient der Druckrohre
$\alpha_G$: thermischer Ausdehnungskoeffizient des Grundkörpers und wobei
$\beta \le 0,1$, vorzugsweise $\le 0,05$, besonders bevorzugt $\le 0,02$ ist.

Eine hierzu alternative Weiterbildung der Erfindung sieht vor, dass die zumindest eine Biegung des jeweiligen Druckrohres derartig ausgebildet ist, dass das erste und zweite Druckrohr voneinander weggerichtet sind und im Wesentlichen folgendes gilt:

$$\left| \frac{\left(d - c - \frac{a}{2}\right) \cdot \alpha_K + c \cdot \alpha_{VK} + \frac{a}{2} \cdot \alpha_{DZ} - d \cdot \alpha_G}{\left(d - c - \frac{a}{2}\right) \cdot \alpha_K + c \cdot \alpha_{VK} + \frac{a}{2} \cdot \alpha_{DZ} + d \cdot \alpha_G} \right| \le \beta$$

mit:

a: Dicke der Differenzdruckmesszelle in Richtung einer ersten Achse, welche durch einen ersten Mittelpunkte der ersten Verbindungsfläche und einem zweiten Mittelpunkt der zweiten Verbindungsfläche festgelegt ist;
c: Abstand in Richtung der ersten Achse zwischen einer zweiten Achse, welche eine Symmetrieachse des Differenzdrucksensors darstellt und dem ersten Mittelpunkt;
d: Abstand in Richtung der ersten Achse zwischen der zweiten Achse und einem Mittelpunkt des ersten Endes des Druckrohres;
$\alpha_{DZ}$: thermischer Ausdehnungskoeffizient der Differenzdruckmesszelle;
$\alpha_{VK}$: thermischer Ausdehnungskoeffizient des Versteifungskörpers;
$\alpha_K$: thermischer Ausdehnungskoeffizient der Druckrohre
$\alpha_G$: thermischer Ausdehnungskoeffizient des Grundkörpers und wobei
$\beta \le 0,1$, vorzugsweise $\le 0,05$, besonders bevorzugt $\le 0,02$ ist.

Eine weitere vorteilhafte Weiterbildung der Erfindung sieht vor, dass der erste Mittelpunkt der erste Verbindungsfläche und der zweite Mittelpunkt der zweiten Verbindungsfläche um jeweils einen vorbestimmten Wert $c_Z$ aus einer Ebene, die orthogonal zu einer Fügeebene an der der jeweilige Versteifungskörper mit der Differenzdruckmesszelle gefügt ist, heraus und rotationssymmetrisch zur zweiten Achse versetzt sind. Insbesondere kann die Weiterbildung vorsehen, dass im Wesentlichen folgendes gilt:

$$\frac{|c_Z| \cdot \alpha_{VK} + |d_Z| \cdot \alpha_G - (|c_Z| + |d_Z|) \cdot \alpha_K}{|c_Z| \cdot \alpha_{VK} + |d_Z| \cdot \alpha_G + (|c_Z| + |d_Z|) \cdot \alpha_K} \le \beta$$

mit:

$c_z$: Abstand in Richtung einer dritten Achse (48) zwischen der Ebene (49) und dem ersten bzw. dem zweiten Mittelpunkt (21 a, 23a) der erste bzw. zweiten Verbindungsfläche (21, 23), wobei die dritte Achse orthogonal auf die erste und zweite Achse ist;

$d_z$: Abstand zwischen der Ebene (49) und dem Mittelpunkt des jeweiligen Druckrohres am ersten Ende (20aa, 22aa);

$\alpha_{VK}$: thermischer Ausdehnungskoeffizient des Versteifungskörpers;

$\alpha_K$: thermischer Ausdehnungskoeffizient der Druckrohre;

$\alpha_G$: thermischer Ausdehnungskoeffizient des Grundkörpers und wobei

$\beta \leq 0{,}1$, vorzugsweise $\leq 0{,}05$, besonders bevorzugt $\leq 0{,}02$ ist.

Die Erfindung wird anhand der nachfolgenden Zeichnungen näher erläutert. Es zeigt:

Fig. 1: einen schematischen Längsschnitt durch einen aus dem Stand der Technik bekannten Differenzdrucksensor,

Fig. 2: einen schematischen Längsschnitt durch ein erstes Ausführungsbeispiel eines erfindungsgemäßen Differenzdrucksensors,

Fig. 3: einen schematischen Längsschnitt durch ein zweites Ausführungsbeispiel eines erfindungsgemäßen Differenzdrucksensors,

Fig. 4: eine schematische Draufsicht auf das erste Ausführungsbeispiel des erfindungsgemäßen Differenzdrucksensors, und

Fig. 5: eine schematische Draufsicht auf ein drittes Ausführungsbeispiel eines erfindungsgemäßen Differenzdrucksensors.

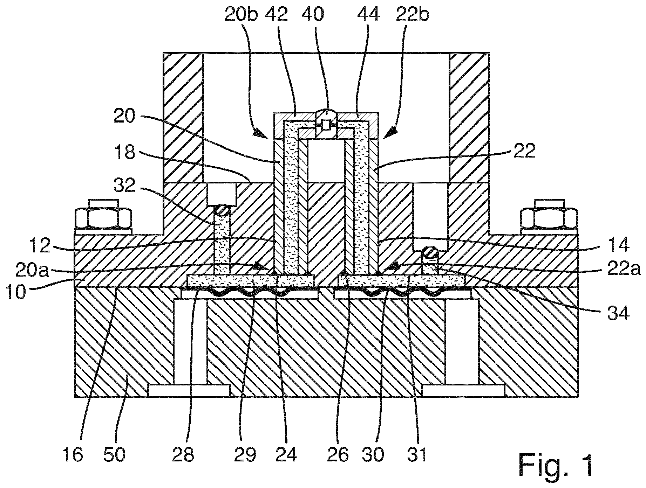

Der in Fig. 1 gezeigte und aus dem Stand der Technik bekannte Differenzdrucksensor umfasst einen Grundkörper 10, welcher typischerweise einen VA-Stahl aufweist. Durch den Grundkörper 10 erstrecken sich als gerade Bohrungen von einer ersten Fläche 16 des Grundkörpers 10 zu einer zweiten Fläche 18 des Grundkörpers 10 eine erste und eine zweite Druckeingangsöffnung 12, 14. In dem in Fig. 1 dargestellten Beispiel erstrecken sich die Druckeingangsöffnungen 12, 14 von einer Prozessanschlussfläche 16 zu einer der Prozessanschlussfläche 16 abgewandten Rückseite 18 des Grundkörpers. In die Bohrungen sind erste und zweite gerade Druckrohre in Form von Kapillarrohren 20, 22 eingesetzt, die rückseitig aus dem Grundkörper 10 herausragen und auf der Seite der Prozessanschlussfläche 16 mit umlaufenden Schweißnähten 24, 26 druckdicht mit dem Grundkörper 10 verbunden sind.

Die beiden Druckeingangsöffnungen 12, 14 sind jeweils mit einer ersten bzw. zweiten Trennmembran 28, 30 verschlossen, wobei die Trennmembranen jeweils entlang einer umlaufenden Schweißnaht druckdicht mit der Prozessanschlussfläche 16 des Grundkörpers 10 verbunden sind. Von den Trennmembranen 28, 30 überdeckte erste und zweite Vertiefungen 29, 31, weisen im Wesentlichen eine flache Grundfläche auf. D.h. es ist kein Membranbett vorgesehen, an denen eine Trennmembran abgestützt wird, wenn sie im Überlastfall zur Anlage kommt. Auf diese Maßnahme kann vorliegend verzichtet werden, da der Differenzdrucksensor eine überlastfeste Differenzdruckmesszelle 40 aufweist, deren Festigkeit noch durch zwei keramische Versteifungskörper 42, 44 aus bspw. Siliziumnitrid oder Aluminiumnitrid erhöht wird, die beidseitig der Differenzdruckmesszelle 40 mittels Glaslot mit der Differenzdruckmesszelle 40 gefügt sind. Die Differenzdruckmesszelle 40 ist insbesondere eine mikromechanische Differenzdruckmesszelle 40, die Silizium als Werkstoff aufweist und einen kapazitiven Wandler umfasst. Die Differenzdruckmesszelle 40, kommuniziert durch Kanäle, die durch die Versteifungskörper 42, 44 laufen mit den beiden Druckrohren 20, 22, wobei die Versteifungskörper 42, 44 jeweils druckdicht und drucktragend auf rückseitige Stirnflächen der Druckrohre 20, 22 geklebt oder gelötet sind.

Durch den Grundkörperkörper 10 erstrecken sich von dessen Rückseite 18 zudem erste und zweite Befüllkanäle 32 34 die jeweils in einer der Vertiefungen 29, 31 in der Prozessanschlussfläche münden. Über diese Befüllkanäle werden die mit Ihnen kommunizierenden Teilvolumina des hydraulischen Systems des Differenzdrucksensors mit einer Übertragungsflüssigkeit gefüllt. Anschließend werden die Befüllkanäle 32, 34 druckdicht verschlossen.

Der Differenzdrucksensor ist mit seiner Prozessanschlussfläche voran an einem Prozessanschlussblock 50 mittels Bolzen fixiert.

Wie zuvor beschrieben, kann der Grundkörper einen VA-Stahl, die Druckrohre eine Kovar-Legierung, der Versteifungskörper einen keramischen Werkstoff und das Differenzdrucksensorelement ein Halbleitermaterial, bspw. Silizium, aufweisen.

Aufgrund der unterschiedlichen thermischen Ausdehnungskoeffizienten der einzelnen Werkstoffe, kommt es zu unterschiedlichen thermomechanischen Verhalten der einzelnen Elemente. Insbesondere dehnt sich der Grundkörper

aus VA-Stahl ($\alpha_G$ ca. 15-20 ppm/Kelvin) deutlich mehr aus, als der Verbund aus Differenzdruckmesszelle aus Silizium ($\alpha_{DZ}$ ca. 1-3 ppm/Kelvin) und den Versteifungskörpern aus einer Keramik ($\alpha_{VK}$ ca. 3-8 ppm/Kelvin). Diese Ausdehnungsunterschiede resultieren bei einer Temperaturänderung $\Delta T$ in einer thermomechanischen Rückwirkung des Grundkörpers auf den Verbund und führen zu den eingangs erwähnten Nachteilen.

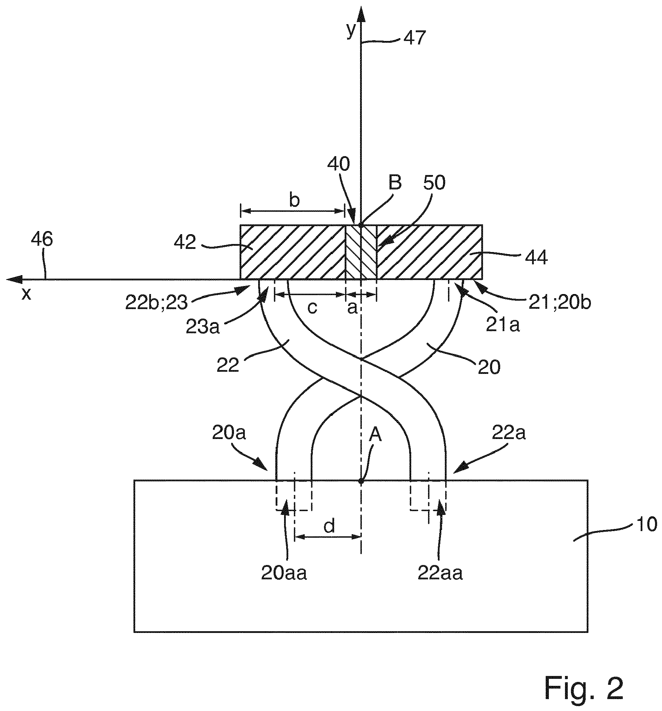

Fig. 2 zeigt einen schematischen Längsschnitt durch ein erstes Ausführungsbeispiel eines erfindungsgemäßen Differenzdrucksensors, der hinsichtlich der thermomechanischen Rückwirkung verbesserte Eigenschaften aufweist. Hierzu weist der Differenzdrucksensor anstelle der in Fig. 1 dargestellten geraden Druckrohre gebogene Druckrohre bzw. Kapillarrohre in einem Bereich zwischen der zweiten Fläche 18 des Grundkörpers und der rückseitigen Stirnflächen der Druckrohre 20, 22 auf.

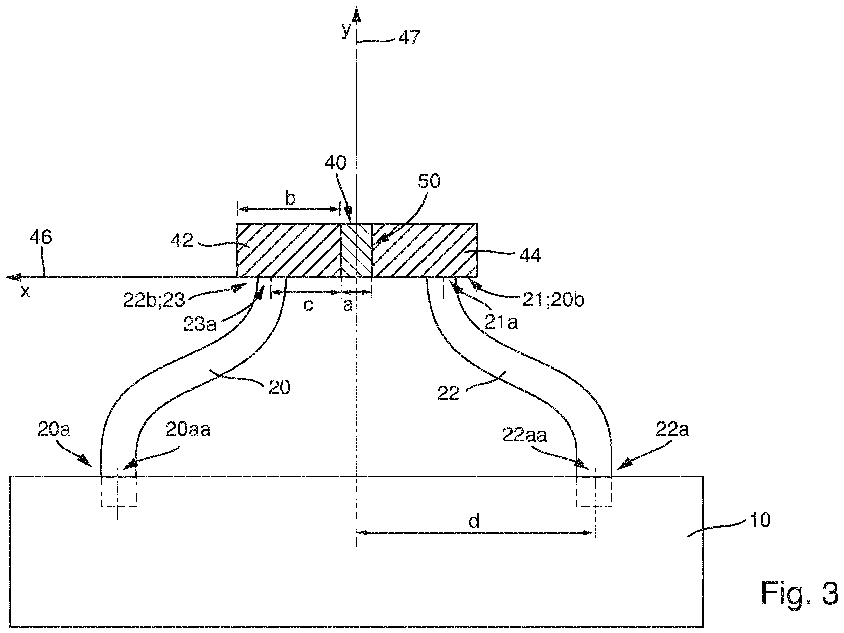

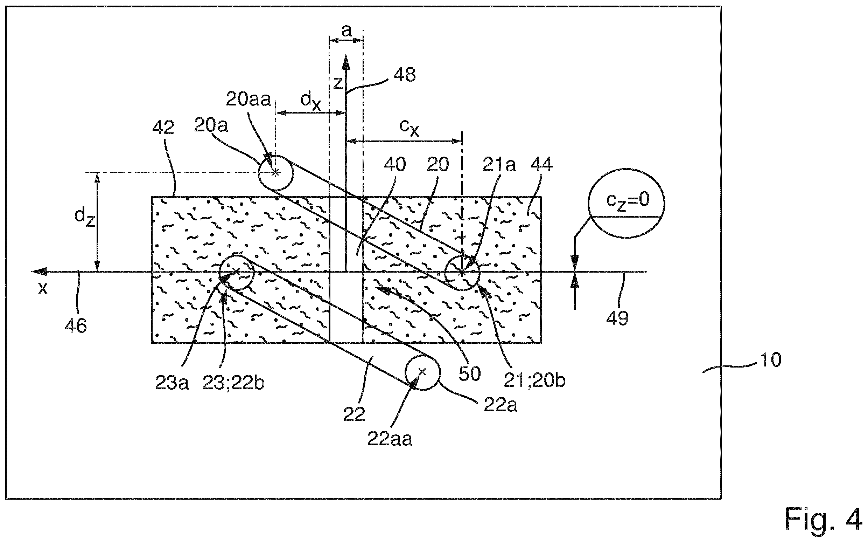

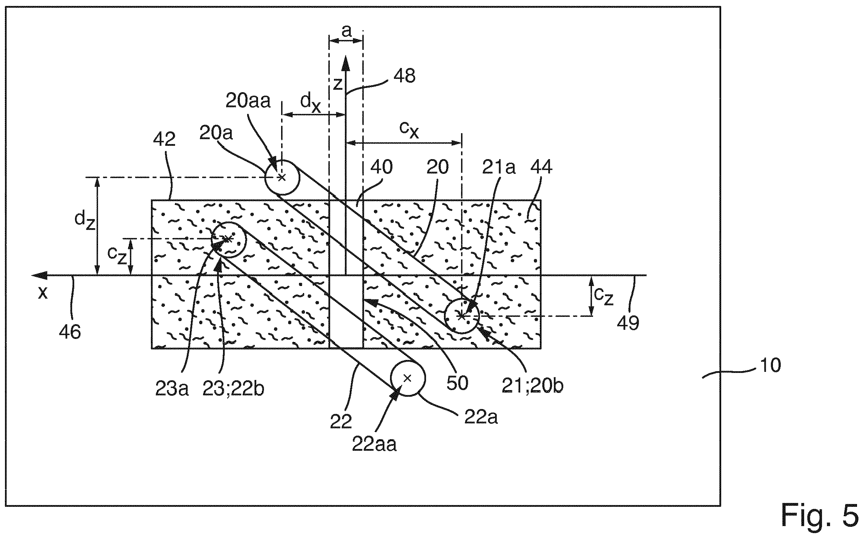

Zur Verdeutlichung ist in den Fig. 2 bis 5 exemplarisch ein Koordinatensystem eingezeichnet, welches eine x-, y- und z-Achse aufweist. Das Koordinatensystem ist derartig ausgerichtet, dass die zweite Fläche des Grundkörpers in einer xy-Ebene liegt, die durch die x-Achse und die y-Achse aufgespannt wird, wobei die z-Achse orthogonal zur xy-Ebene ist. Die y-Achse stellt ferner eine Symmetrieachse bzw. Rotationsachse des Differenzdrucksensors dar. Aufgrund des im Wesentlichen symmetrischen Aufbaus kann die Betrachtung auf eine Symmetriehälfte beschränkt werden. In Fig. 2 und 3 verläuft die z-Achse derartig, dass diese quasi in die Blattebene hinein führt und in Fig. 4 und 5 verläuft die y-Achse derartig, dass diese quasi aus der Blattebene heraus führt.

Die Erfindung geht prinzipiell von der Idee aus, dass aufgrund der unterschiedlichen thermischen Ausdehnungskoeffizienten der einzelnen Werkstoffe eine thermomechanische Rückwirkung des Grundkörpers auf den Verbund aus Versteifungskörper und Differenzdruckmesszelle minimiert werden kann, wenn die Summe der thermischen Ausdehnungen der einzelnen Elemente entlang einer Achse minimal ist. Im Idealfall, lässt sich so eine thermomechanische Rückwirkung im Wesentlichen vollständig unterbinden, wenn die Summe der thermischen Ausdehnungen der einzelnen Elemente entlang einer Achse im Wesentlichen Null ist.

Im Folgenden soll zwischen zwei Fällen unterschieden werden:

- 1. Fall: Die Kapillarrohre weisen eine Biegung zur Symmetrieachse bzw. zu dem jeweiligen anderen Kapillarrohr hin auf;
- 2. Fall: Die Kapillarrohre weisen eine vom Versteifungskörper aus gesehene Biegung von der Symmetrieachse weg bzw. von dem jeweiligen anderen Kapillarrohr weg auf.

In Fig. 2 ist ein Ausführungsbeispiel gemäß des ersten Falles dargestellt, bei dem die Kapillarrohre derartig gebogen sind, dass sie eine Biegung zu dem jeweilig anderen Kapillarrohr hin aufweisen.

Basierend auf der prinzipiellen Idee ergibt sich, für den in Fig. 2 dargestellten ersten Fall, folgende Gleichung:

$$d \cdot \alpha_G \cdot \Delta T - \left(c + d + \frac{a}{2}\right) \cdot \alpha_K \cdot \Delta T + c \cdot \alpha_{VK} \cdot \Delta T + \frac{a}{2} \cdot \alpha_{DZ} \cdot \Delta T = 0$$

mit:

a: Dicke der Differenzdruckmesszelle 40 in Richtung einer ersten Achse 46, welche durch einen ersten Mittelpunkte 21a der ersten Verbindungsfläche 21 und einem zweiten Mittelpunkt 23a der zweiten Verbindungsfläche 23 festgelegt ist;

c: Abstand in Richtung der ersten Achse 46 zwischen einer zweiten Achse 47, welche eine Symmetrieachse des Differenzdrucksensors darstellt und dem ersten Mittelpunkt 21a;

d: Abstand in Richtung der ersten Achse 46 zwischen der zweiten Achse 47 und einem Mittelpunkt 20aa des ersten Endes des Druckrohres;

$\alpha_{DZ}$: thermischer Ausdehnungskoeffizient der Differenzdruckmesszelle;

$\alpha_{VK}$: thermischer Ausdehnungskoeffizient des Versteifungskörpers;

$\alpha_K$: thermischer Ausdehnungskoeffizient der Druckrohre

$\alpha_G$: thermischer Ausdehnungskoeffizient des Grundkörpers.

Ausgehend von der obigen Gleichung ergibt sich somit ein Differenzdrucksensor mit minimalen thermomechanischen Rückwirkungen, wenn folgende Gleichung erfüllt ist:

$$d \cdot \alpha_G + c \cdot \alpha_{VK} \cdot + \frac{a}{2} \cdot \alpha_{DZ} = \left(c + d + \frac{a}{2}\right) \cdot \alpha_K$$

Hieraus lässt sich, für den Entwurf eines Differenzdrucksensors mit minimalen thermomechanischen Rückwirkungen, gemäß dem ersten Fall, folgende Entwurfsgleichung ableiten:

$$\left| \frac{d \cdot \alpha_G + c \cdot \alpha_{VK} \cdot + \frac{a}{2} \cdot \alpha_{DZ} - \left(c + d + \frac{a}{2}\right) \cdot \alpha_K}{d \cdot \alpha_G + c \cdot \alpha_{VK} \cdot + \frac{a}{2} \cdot \alpha_{DZ} + \left(c + d + \frac{a}{2}\right) \cdot \alpha_K} \right| \leq \beta,$$

wobei $\beta \leq 0{,}1$, vorzugsweise $\leq 0{,}05$, besonders bevorzugt $\leq 0{,}02$ ist.

Mittels der Entwurfsgleichung können somit anhand bereits vorgegebener bzw. aufgrund der Werkstoffwahl festgelegter thermischer Ausdehnungskoeffizienten ein Parametersatz für die Parameter a, c und d bestimmt werden, die die Biegung der Kapillarrohre definiert bzw. festlegt.

So lässt sich mittels der obigen Entwurfsgleichung für den ersten Fall bspw. ein Differenzdrucksensor mit folgenden Parametern: a = 1 mm; c = 3 mm und d = 2,21 mm entwerfen, wobei die folgende thermischen Ausdehnungskoeffizienten zugrunde gelegt wurden: $\alpha_{DZ}$ = 2 ppm/K; $\alpha_{VK}$ = 5 ppm/K; $\alpha_K$ = 9 ppm/K und $\alpha_G$ = 16 ppm/K.

Fig. 3 zeigt einen schematischen Längsschnitt durch ein zweites Ausführungsbeispiel eines erfindungsgemäßen Differenzdrucksensors, bei dem die Kapillarrohre gemäß dem zuvor beschriebenen zweiten Fall eine vom Versteifungskörper aus gesehene Biegung nach außen aufweisen.

Basierend auf derselben Grundannahme wie im ersten Fall, ergibt sich, für den in Fig. 3 dargestellten zweiten Fall, folgende Gleichung:

$$d \cdot \alpha_G \cdot \Delta T - \left(d - c - \frac{a}{2}\right) \cdot \alpha_K \cdot \Delta T - c \cdot \alpha_{VK} \cdot \Delta T - \frac{a}{2} \cdot \alpha_{DZ} \cdot \Delta T = 0$$

wiederum mit:

a: Dicke der Differenzdruckmesszelle 40 in Richtung einer ersten Achse 46, welche durch einen ersten Mittelpunkte 21a der ersten Verbindungsfläche (21) und einem zweiten Mittelpunkt 23a der zweiten Verbindungsfläche 23 festgelegt ist;

c: Abstand in Richtung der ersten Achse 46 zwischen einer zweiten Achse 47, welche eine Symmetrieachse des Differenzdrucksensors darstellt und dem ersten Mittelpunkt 21a;

d: Abstand in Richtung der ersten Achse 46 zwischen der zweiten Achse 47 und einem Mittelpunkt 20aa des ersten Endes des Druckrohres;

$\alpha_{DZ}$: thermischer Ausdehnungskoeffizient der Differenzdruckmesszelle;

$\alpha_{VK}$: thermischer Ausdehnungskoeffizient des Versteifungskörpers;

$\alpha_K$: thermischer Ausdehnungskoeffizient der Druckrohre

$\alpha_G$: thermischer Ausdehnungskoeffizient des Grundkörpers.

Ausgehend von der obigen Gleichung ergibt sich somit ein Differenzdrucksensor mit minimalen thermomechanischen Rückwirkungen, wenn folgende Gleichung erfüllt ist:

$$d \cdot \alpha_G = \left(d - c - \frac{a}{2}\right) \cdot \alpha_K + c \cdot \alpha_{VK} + \frac{a}{2} \cdot \alpha_{DZ}$$

Hieraus lässt sich, für den Entwurf eines Differenzdrucksensors mit minimalen thermomechanischen Rückwirkungen, gemäß dem zweiten Fall, folgende Entwurfsgleichung ableiten:

$$\left| \frac{\left(d - c - \frac{a}{2}\right) \cdot \alpha_K + c \cdot \alpha_{VK} + \frac{a}{2} \cdot \alpha_{DZ} - d \cdot \alpha_G}{\left(d - c - \frac{a}{2}\right) \cdot \alpha_K + c \cdot \alpha_{VK} + \frac{a}{2} \cdot \alpha_{DZ} + d \cdot \alpha_G} \right| \leq \beta,$$

wobei wiederum $\beta \leq 0{,}1$, vorzugsweise $\leq 0{,}05$, besonders bevorzugt $\leq 0{,}02$ ist.

So lässt sich mittels der obigen Entwurfsgleichung für den zweiten Fall bspw. ein Differenzdrucksensor mit folgenden Parametern: a = 0,8 mm; c = 3 mm und d = 6 mm entwerfen, wobei die folgende thermischen Ausdehnungskoeffizienten zugrunde gelegt wurden: $\alpha_{DZ}$ = 2 ppm/K; $\alpha_{VK}$ = 5 ppm/K; $\alpha_K$ = 9 ppm/K und $\alpha_G$ = 16 ppm/K.

In den zuvor beschriebenen und in Fig. 2 und Fig. 3 dargestellten Fällen, ist davon ausgegangen worden, dass alle Materialien einen isotropen thermischen Ausdehnungskoeffizienten aufweisen.

Prinzipiell kann aber auch der Fall auftreten, dass die Materialien keinen isotropen Ausdehnungskoeffizienten aufweisen, so dass in den obigen Gleichungen die thermische Ausdehnung in Richtung der y-Achse oder z-Achse oder ggfl. eine winkelabhängige Linearkombination daraus aufgeführt werden muss.

Ferner ist in dem zuvor beschriebenen Beispielen davon ausgegangen worden, dass die Kapillarrohre 20, 22 nur in einer Ebene eine Verbiegung aufweisen, umso die thermomechanischen Rückwirkungen des Grundkörpers 10 auf den Verbund aus Versteifungskörper 42, 44 und Differenzdruckmesszelle 10 entlang der x-Achse zu minimieren. Tatsächlich treten natürlich auch thermomechanische Rückwirkungen entlang der anderen Achse auf. In dem in Fig. 2 dargestellten Ausführungsbeispiel bspw. entlang der z-Achse. Dies führt dann dazu, dass zur Minimierung der thermomechanischen Rückwirkungen die Kapillarrohre 20, 22 eine 3D- Verbiegung, d.h. eine Biegung in zwei Ebenen, aufweisen müssen. Fertigungstechnisch sind derartig 3D-gebogene Kapillarrohre allerdings aufwendiger herzustellen, als Kapillarrohre mit 2D-Verbiegung, d.h. Kapillarrohre die nur in einer Ebene gebogen sind, so dass diese Variante gerne vermieden wird.

Im Folgenden wird ein weiterer erfindungsgemäßer Gedanken erläutert, mit dem es möglich ist, eine komplexe und aufwendig herzustellende 3D-Verbiegung der Kapillarrohre 20, 22 zu vermeiden. Exemplarisch ist hierfür in Fig. 4 eine schematische Draufsicht auf den in Fig. 2 dargestellten Differenzdrucksensor gezeigt.

Aus Fig. 4 wird ersichtlich, dass die beiden Verbindungsflächen 21, 23 zwischen dem jeweiligen zweiten Ende 20b, 22b des jeweiligen Kapillarrohres 20, 22 und dem jeweiligen Versteifungskörper 42, 44 symmetrisch zu einer yz-Ebene angeordnet sind und mit ihren Mittelpunkten 21 a, 23a auf der x-Achse liegen, so dass sich für den Abstand zwischen der x-Achse und den Mittelpunkten 21 a, 23a des zweiten Endes des Kapillarrohres entlang der z-Achse null ($c_Z = 0$) ergibt.

Wendet man die prinzipielle Idee der Erfindung auch auf die z-Achse an, so ergibt sich, gemäß der in Fig. 4 dargestellten Draufsicht, folgende Gleichung:

$$d_z \cdot \alpha_G = d_z \cdot \alpha_K$$

mit:

d$_z$: Abstand zwischen der Ebene 49 und dem Mittelpunkt des jeweiligen Druckrohres am ersten Ende 20aa, 22aa;
$\alpha_K$: thermischer Ausdehnungskoeffizient der Druckrohre
$\alpha_G$: thermischer Ausdehnungskoeffizient des Grundkörpers.

Hieraus folgt, dass die Gleichung nur erfüllbar ist, wenn $\alpha_G = \alpha_K$ ist, d.h. die Materialien für den Grundköper und die Kapillarrohre so gewählt werden, dass diese einen im Wesentlichen gleichen thermischen Ausdehnungskoeffizient aufweisen.

In dem Fall, dass die Materialien des Grundkörpers 10 und der Kapillarrohre 20, 22 unterschiedliche thermische Ausdehnungskoeffizienten aufweisen, kann die thermomechanische Rückwirkung entlang der z-Achse trotzdem noch ohne eine 3D-Verbiegung der Kapillarrohre 20, 22 minimiert werden. Hierzu werden erfindungsgemäß die Verbindungsflächen 21, 23 zwischen dem zweiten Ende 20b, 22b des jeweiligen Kapillarrohres 20, 22 und dem jeweiligen Versteifungskörper 40, 44 um einen vorbestimmten Wert c$_Z$ aus der x-Ebene 49 heraus antisymmetrisch zur Symmetrieachse versetzt.

Fig. 5 zeigt eine schematische Draufsicht auf ein drittes Ausführungsbeispiel eines erfindungsgemäßen Differenzdrucksensors, bei dem die beiden Verbindungsflächen 21, 23 um den Wert c$_Z$ versetzt sind, so dass sich für den thermischen Spannungsausgleich in z-Richtung folgende Gleichung ergibt:

$$c_Z \cdot \alpha_{VK} + d_Z \cdot \alpha_G = (c_Z + d_Z) \cdot \alpha_K$$

mit:

c$_z$: Abstand in Richtung einer dritten Achse 48 zwischen der Ebene 49 und dem ersten bzw. dem zweiten Mittelpunkt 21 a, 23a der erste bzw. zweiten Verbindungsfläche 21, 23, wobei die dritte Achse orthogonal auf die erste und zweite Achse ist;
d$_z$: Abstand zwischen der Ebene 49 und dem Mittelpunkt des jeweiligen Druckrohres am ersten Ende 20aa, 22aa;

$\alpha_{VK}$: thermischer Ausdehnungskoeffizient des Versteifungskörpers;
$\alpha_K$: thermischer Ausdehnungskoeffizient der Druckrohre;
$\alpha_G$: thermischer Ausdehnungskoeffizient des Grundkörpers.

Hieraus lässt sich, für den Entwurf eines Differenzdrucksensors mit minimalen thermomechanischen Rückwirkungen, gemäß dem dritten Ausführungsbeispiel, folgende Entwurfsgleichung ableiten:

$$\frac{|c_Z| \cdot \alpha_{VK} + |d_Z| \cdot \alpha_G - (|c_Z| + |d_Z|) \cdot \alpha_K}{|c_Z| \cdot \alpha_{VK} + |d_Z| \cdot \alpha_G + (|c_Z| + |d_Z|) \cdot \alpha_K} \leq \beta$$

wobei $\beta \leq 0{,}1$, vorzugsweise $\leq 0{,}05$, besonders bevorzugt $\leq 0{,}02$ ist.

Für diese Entwurfsgleichung lässt sich im Allgemeinen wiederum eine Lösung für $c_Z$ und $d_Z$ bei festgelegten thermischen Ausdehnungskoeffizienten $\alpha_K$ und $\alpha_G$ finden.

So lässt sich bspw. ein Differenzdrucksensor mit folgenden Parametern: $c_Z$ = 2 mm; $d_Z$ = 1,14 mm entwerfen, wobei die folgende thermischen Ausdehnungskoeffizienten zugrunde gelegt wurden: $\alpha_{DZ}$ = 2 ppm/K; $\alpha_{VK}$ = 5 ppm/K; $\alpha_K$ = 9 ppm/K, $\alpha_G$ = 16 ppm/K und $\beta$ = 0.

Für das in Fig. 5 dargestellte Ausführungsbeispiel gilt weiterhin die Entwurfsgleichung für die oben genannten Fälle entlang der x-Achse, so dass die Biegung durch den Parametersatz $a_x$, $b_x$, $c_x$, $d_x$, $c_z$ und $d_z$ festgelegt ist.

**Bezugszeichenliste**

| | |
|---|---|
| 10 | Grundkörper |
| 12 | Erste Druckeingangsöffnung |
| 14 | Zweite Druckeingangsöffnung |
| 16 | Erste Fläche |
| 18 | Zweite Fläche |
| 20 | Erstes Druckrohr |
| 20a | Erstes Ende des ersten Druckrohres |
| 20aa | Mittelpunkt des ersten Endes des ersten Druckrohres |
| 20b | Zweites Ende des ersten Druckrohres |
| 21 | Erste Verbindungsfläche |
| 21a | Erster Mittelpunkt der ersten Verbindungsfläche |
| 22 | Zweites Druckrohr |
| 22a | Erstes Ende des zweiten Druckrohres |
| 22aa | Mittelpunkt des ersten Endes des zweiten Druckrohres |
| 22b | Zweites Ende des zweiten Druckrohres |
| 23 | Zweite Verbindungsfläche |
| 23a | Zweiter Mittelpunkt der zweiten Verbindungsfläche |
| 24,26 | Schweißnähte |
| 28 | Erste Trennmembran |
| 29 | Erste Vertiefung |
| 30 | Zweite Trennmembran |
| 31 | Zweite Vertiefung |
| 40 | Differenzdruckmesszelle |
| 42 | Erster Versteifungskörper |
| 43 | Erster Kanal |
| 44 | Zweiter Versteifungskörper |
| 45 | Zweiter Kanal |
| 46 | Erste Achse (x-Achse) |
| 47 | Zweite Achse bzw. Symmetrieachse des Differenzdrucksensors (y-Achse) |
| 48 | Dritte Achse (z-Achse) |
| 49 | Ebene |
| 50 | Fügeebene |

**Patentansprüche**

1. Differenzdrucksensor zur Bestimmung eines Druckmesssignals, umfassend:

   - eine Differenzdruckmesszelle (40), welcher ein erster und ein zweiter Druck zuführbar ist und welche einen Wandler aufweist, der in Abhängigkeit einer Differenz zwischen dem ersten und dem zweiten Druck das Druckmesssignal ausgibt;
   - einen ersten keramischen, vorzugsweise Aluminiumnitrid aufweisenden Versteifungskörper (42), der mit der Differenzdruckmesszelle (40) gefügt ist und einen ersten Kanal (43) aufweist, über den der erste Druck der Differenzdruckmesszelle (40) zuführbar ist;
   - einen zweiten keramischen, vorzugsweise Aluminiumnitrid aufweisenden Versteifungskörper (44), der mit der Differenzdruckmesszelle (40) gefügt ist und einen zweiten Kanal (45) aufweist, über den der zweite Druck der Differenzdruckmesszelle (40) zuführbar ist;
   - einen Grundkörper (10) mit einer ersten und einer zweiten Druckeingangsöffnung (12, 14), die sich jeweils von einer ersten Fläche (16) zu einer zweiten Fläche (18) des Grundkörpers (10) erstrecken, wobei die Druckeingangsöffnungen (12, 14) an der ersten Fläche (16) jeweils mit einer Trennmembran (28, 30) verschlossen sind,
   - ein erstes Druckrohr (20), welches mit einem ersten Ende (20a) mit der ersten Druckeingangsöffnung (12) kommuniziert und druckfest mit dem Grundkörper (10) verbunden ist, wobei das erste Druckrohr (20) mit einem zweiten Ende (20b) druckfest mit dem ersten Versteifungskörper (42) an einer ersten Verbindungsfläche (21) verbunden ist,
   - ein zweites Druckrohr (22), welches mit einem ersten Ende (22a) mit der zweiten Druckeingangsöffnung (14) kommuniziert und druckfest mit dem Grundkörper (10) verbunden ist, wobei das zweite Druckrohr (22) mit einem zweiten Ende (22b) druckfest mit dem zweiten Versteifungskörper (44) an einer zweiten Verbindungsfläche (23) verbunden ist,

   wobei sowohl das erste Druckrohr (20) und das zweite Druckrohr (22) in einem Bereich zwischen der zweiten Fläche (18) des Grundkörpers und der ersten bzw. zweiten Verbindungsfläche (21, 23) des entsprechenden Druckrohrs (20, 22) jeweils zumindest eine Biegung aufweist.

2. Differenzdrucksensor nach Anspruch 1, wobei die zumindest eine Biegung derartig ausgebildet ist, dass eine thermomechanische Rückwirkung des Grundkörpers (10) auf einen Verbund aus Verstärkungskörper (42, 44) und Differenzdruckmesszelle (40) im thermischen Gleichgewicht minimal ist.

3. Differenzdrucksensor nach einem der Ansprüche 1 oder 2, wobei die zumindest eine Biegung des jeweiligen Druckrohres (20, 22) derartig ausgebildet ist, dass das erste und zweite Druckrohr (20, 22) zueinander hin gerichtet sind, vorzugsweise sich kreuzen, und im Wesentlichen folgendes gilt:

$$\left| \frac{d \cdot \alpha_G + c \cdot \alpha_{VK} \cdot + \frac{a}{2} \cdot \alpha_{DZ} - \left( c + d + \frac{a}{2} \right) \cdot \alpha_K}{d \cdot \alpha_G + c \cdot \alpha_{VK} \cdot + \frac{a}{2} \cdot \alpha_{DZ} + \left( c + d + \frac{a}{2} \right) \cdot \alpha_K} \right| \le \beta$$

mit:

   a: Dicke der Differenzdruckmesszelle (40) in Richtung einer ersten Achse (46), welche durch einen ersten Mittelpunkte (21 a) der ersten Verbindungsfläche (21) und einem zweiten Mittelpunkt (23a) der zweiten Verbindungsfläche (23) festgelegt ist;
   c: Abstand in Richtung der ersten Achse (46) zwischen einer zweiten Achse (47), welche eine Symmetrieachse des Differenzdrucksensors darstellt und dem ersten Mittelpunkt (21 a);
   d: Abstand in Richtung der ersten Achse (46) zwischen der zweiten Achse (47) und einem Mittelpunkt (20aa) des ersten Endes des Druckrohres;
   $\alpha_{DZ}$: thermischer Ausdehnungskoeffizient der Differenzdruckmesszelle;
   $\alpha_{VK}$: thermischer Ausdehnungskoeffizient des Versteifungskörpers;
   $\alpha_K$: thermischer Ausdehnungskoeffizient der Druckrohre
   $\alpha_G$: thermischer Ausdehnungskoeffizient des Grundkörpers und wobei
   $\beta \le 0{,}1$, vorzugsweise $\le 0{,}05$, besonders bevorzugt $\le 0{,}02$ ist.

**4.** Differenzdrucksensor nach einem der Ansprüche 1 oder 2, wobei die zumindest eine Biegung des jeweiligen Druckrohres (20, 22) derartig ausgebildet ist, dass das erste und zweite Druckrohr voneinander weggerichtet sind und im Wesentlichen folgendes gilt:

$$\left| \frac{\left(d - c - \frac{a}{2}\right) \cdot \alpha_K + c \cdot \alpha_{VK} + \frac{a}{2} \cdot \alpha_{DZ} - d \cdot \alpha_G}{\left(d - c - \frac{a}{2}\right) \cdot \alpha_K + c \cdot \alpha_{VK} + \frac{a}{2} \cdot \alpha_{DZ} + d \cdot \alpha_G} \right| \leq \beta$$

mit:

a: Dicke der Differenzdruckmesszelle (40) in Richtung einer ersten Achse (46), welche durch einen ersten Mittelpunkte (21 a) der ersten Verbindungsfläche (21) und einem zweiten Mittelpunkt (23a) der zweiten Verbindungsfläche (23) festgelegt ist;
c: Abstand in Richtung der ersten Achse (46) zwischen einer zweiten Achse (47), welche eine Symmetrieachse des Differenzdrucksensors darstellt und dem ersten Mittelpunkt (21 a);
d: Abstand in Richtung der ersten Achse (46) zwischen der zweiten Achse (47) und einem Mittelpunkt (20aa) des ersten Endes des Druckrohres;
$\alpha_{DZ}$: thermischer Ausdehnungskoeffizient der Differenzdruckmesszelle;
$\alpha_{VK}$: thermischer Ausdehnungskoeffizient des Versteifungskörpers;
$\alpha_K$: thermischer Ausdehnungskoeffizient der Druckrohre
$\alpha_G$: thermischer Ausdehnungskoeffizient des Grundkörpers und wobei
$\beta \leq 0{,}1$, vorzugsweise $\leq 0{,}05$, besonders bevorzugt $\leq 0{,}02$ ist.

**5.** Differenzdrucksensor nach einem der Ansprüche 3 oder 4, wobei der erste Mittelpunkt (21 a) der erste Verbindungsfläche (21) und der zweite Mittelpunkt (23a) der zweiten Verbindungsfläche (23) um jeweils einen vorbestimmten Wert $c_Z$ aus einer Ebene (49), die orthogonal zu einer Fügeebene (50) an der der jeweilige Versteifungskörper (42, 44) mit der Differenzdruckmesszelle (40) gefügt ist, heraus und rotationssymmetrisch zur zweiten Achse (47) versetzt sind.

**6.** Differenzdrucksensor nach Anspruch 5, wobei im Wesentlichen folgendes gilt:

$$\frac{|c_Z| \cdot \alpha_{VK} + |d_Z| \cdot \alpha_G - (|c_Z| + |d_Z|) \cdot \alpha_K}{|c_Z| \cdot \alpha_{VK} + |d_Z| \cdot \alpha_G + (|c_Z| + |d_Z|) \cdot \alpha_K} \leq \beta$$

mit:

$c_z$: Abstand in Richtung einer dritten Achse (48) und zwischen der Ebene (49) und dem ersten bzw. dem zweiten Mittelpunkt (21 a, 23a) der erste bzw. zweiten Verbindungsfläche (21, 23), wobei die dritte Achse orthogonal auf die erste und zweite Achse ist;
$d_z$: Abstand zwischen der Ebene (49) und dem Mittelpunkt des jeweiligen Druckrohres am ersten Ende (20aa, 22aa);
$\alpha_{VK}$: thermischer Ausdehnungskoeffizient des Versteifungskörpers;
$\alpha_K$: thermischer Ausdehnungskoeffizient der Druckrohre;
$\alpha_G$: thermischer Ausdehnungskoeffizient des Grundkörpers und wobei
$\beta \leq 0{,}1$, vorzugsweise $\leq 0{,}05$, besonders bevorzugt $\leq 0{,}02$ ist.

Fig. 1

Fig. 2

Fig. 3

Fig. 4

EP 3 276 319 A1

Fig. 5

EP 3 276 319 A1

Europäisches
Patentamt

European
Patent Office

Office européen
des brevets

**EUROPÄISCHER RECHERCHENBERICHT**

Nummer der Anmeldung

EP 17 17 7865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 006517 A1 (ENDRESS & HAUSER GMBH & CO KG [DE]) 4. Oktober 2012 (2012-10-04) * Zusammenfassung * * Seite 1 - Seite 6 * * Abbildungen 1-2 * ----- | 1-6 | INV. G01L9/00 G01L13/02 G01L19/00 G01L19/06 |
| X | US 2012/085180 A1 (CARTON GEORG [US] ET AL) 12. April 2012 (2012-04-12) * Zusammenfassung * * Seite 1 - Seite 6 * * Abbildungen 1-9 * ----- | 1-6 | |
| X | US 2007/272027 A1 (HEDTKE ROBERT [US]) 29. November 2007 (2007-11-29) * Zusammenfassung * * Seite 1 - Seite 3 * * Abbildungen 1-4 * ----- | 1-6 | |
| X | FR 2 544 071 A1 (DESBORDES A ETS [FR]) 12. Oktober 1984 (1984-10-12) * Zusammenfassung * * Seite 1 - Seite 4 * * Abbildungen 1-3 * ----- | 1-6 | RECHERCHIERTE SACHGEBIETE (IPC) G01L |

Der vorliegende Recherchenbericht wurde für alle Patentansprüche erstellt

| Recherchenort | Abschlußdatum der Recherche | Prüfer |
|---|---|---|
| Den Haag | 14. Dezember 2017 | Ridha, Philipp |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 17 7865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-12-2017

| Im Recherchenbericht angeführtes Patentdokument | Datum der Veröffentlichung | Mitglied(er) der Patentfamilie | Datum der Veröffentlichung |
|---|---|---|---|
| DE 102011006517 A1 | 04-10-2012 | CN 103477199 A<br>DE 102011006517 A1<br>EP 2691754 A1<br>US 2014021563 A1<br>WO 2012130512 A1 | 25-12-2013<br>04-10-2012<br>05-02-2014<br>23-01-2014<br>04-10-2012 |
| US 2012085180 A1 | 12-04-2012 | KEINE | |
| US 2007272027 A1 | 29-11-2007 | CN 101606049 A<br>EP 2029989 A2<br>JP 5351013 B2<br>JP 2009538434 A<br>US 2007272027 A1<br>WO 2007139611 A2 | 16-12-2009<br>04-03-2009<br>27-11-2013<br>05-11-2009<br>29-11-2007<br>06-12-2007 |
| FR 2544071 A1 | 12-10-1984 | DK 134084 A<br>EP 0126697 A1<br>ES 8501875 A1<br>FR 2544071 A1<br>JP S59184832 A<br>KR 840009133 A | 06-10-1984<br>28-11-1984<br>01-12-1984<br>12-10-1984<br>20-10-1984<br>24-12-1984 |

EPO FORM P0461

Für nähere Einzelheiten zu diesem Anhang : siehe Amtsblatt des Europäischen Patentamts, Nr.12/82